# EUROPEAN PATENT SPECIFICATION

(11) **EP 4 472 296 B1**
(45) Date of publication and mention of the grant of the patent: **29.10.2025**
(21) Application number: 23176091.9
(22) Date of filing: 30.05.2023
(51) Int. Cl.: H04W 48/18, H04W 84/06

(54) **METHOD FOR USING A USER EQUIPMENT WITH A MOBILE COMMUNICATION NETWORK AND/OR FOR AN ENERGY-SAVING OPERATION OF THE USER EQUIPMENT WITH THE MOBILE COMMUNICATION NETWORK, USER EQUIPMENT, SYSTEM OR MOBILE COMMUNICATION NETWORK, PROGRAM AND COMPUTER-READABLE MEDIUM**
VERFAHREN ZUM NUTZEN EINES BENUTZERGERÄTS MIT EINEM MOBILFUNKNETZ UND/ODER ZUM ENERGIESPARENDEN BETRIEB DES BENUTZERGERÄTS
PROCÉDÉ D'UTILISATION D'UN ÉQUIPEMENT UTILISATEUR AVEC UN RÉSEAU DE COMMUNICATION MOBILE ET/OU POUR UN FONCTIONNEMENT ÉCONOME EN ÉNERGIE

(43) Date of publication of application: 04.12.2024
(73) Proprietor: Deutsche Telekom AG, 53113 Bonn (DE)
(72) Inventor: KLATT, Axel, 50999 Köln (DE)
(74) Representative: Schwöbel, Thilo K.

(56) References cited:
- WO-A1-2023/068458
- US-A1- 2023 079 636
- US-A1- 2023 121 634

## Description

### BACKGROUND

The present invention relates a method for using a user equipment with a mobile communication network and/or for an energy-saving operation of the user equipment with the mobile communication network, wherein the mobile communication network provides communication services to the user equipment using a radio access network that serves or provides radio coverage to the user equipment, wherein at least a part of the radio access network corresponds to a terrestrial radio access network that provides radio access network functionality to the user equipment, wherein additional, or complemental, radio access network functionality is able to be provided, to the user equipment, by means of a non-terrestrial radio access network, wherein the user equipment is able to switch or to be switched from being provided with radio access network functionality either by means of the terrestrial radio access network or by means of the non-terrestrial radio access network.

Furthermore, the present invention relates to a user equipment for being used with a mobile communication network and/or for being operated in or according to an energy-saving configuration of the user equipment with the mobile communication network, wherein the user equipment is configured such that the mobile communication network is able to provide communication services to the user equipment using a radio access network that serves or provides radio coverage to the user equipment, at least a part of the radio access network corresponding to a terrestrial radio access network that provides radio access network functionality to the user equipment, wherein the user equipment is furthermore configured such that additional, or complemental, radio access network functionality is able to be provided, to the user equipment, by means of a non-terrestrial radio access network, wherein the user equipment is able to switch or to be switched from being provided with radio access network functionality either by means of the terrestrial radio access network or by means of the non-terrestrial radio access network.

Additionally, the present invention relates to a system or mobile communication network for using a user equipment with the mobile communication network and/or for an energy-saving operation of the user equipment with the mobile communication network, wherein the mobile communication network provides communication services to the user equipment using a radio access network that serves or provides radio coverage to the user equipment,
wherein at least a part of the radio access network corresponds to a terrestrial radio access network that provides radio access network functionality to the user equipment, wherein additional, or complemental, radio access network functionality is able to be provided, to the user equipment, by means of a non-terrestrial radio access network, wherein the user equipment is able to switch or to be switched from being provided with radio access network functionality either by means of the terrestrial radio access network or by means of the non-terrestrial radio access network.

Furthermore, the present invention relates to a program and to a computer-readable medium for using a user equipment with a mobile communication network and/or for an energy-saving operation of the user equipment with the mobile communication network according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies. Such mobile communication networks that are purely or predominantly based on terrestrial infrastructures of the radio access network are typically organized throughout a country (or a part of or a region within a country) in a repeating pattern of typically stationary (radio) cells (and associated base station entities) which typically belong to (or are used by or associated or assigned to) a mobile network operator (MNO).

Modern mobile communication networks, such as 5G systems, especially using 5G NR (new radio) radio (access) technology, are evolving using air-based and/or space-based infrastructure, hence relying, at least partly, on non-terrestrial infrastructure, especially in the form of satellites and/or high altitude platforms, HAPs, thereby realizing non-terrestrial networks, NTN (or satellite communication networks). Examples of such air-based and/or space-based network infrastructure include, e.g., mobile satellite connectivity with low earth orbit (LEO) satellites, medium earth orbit (MEO) satellites and/or geostationary earth orbit (GEO) satellites and also so-called high-altitude platforms or high-altitude pseudo-satellites (HAPS).

Such non-terrestrial networks are able to provide global cellular connectivity to handheld devices or user equipments, typically using satellite or HAP coverage, e.g. using earth-fixed beams or service links, quasi-earth fixed beams or service links and/or earth-moving beams or service links; of course, this being possible - due to the movement of such satellites and/or HAPS relative to the earth surface - only during certain, comparatively short, time intervals of, at most, the order of a couple of minutes in the case of satellites.

One possibility of using non-terrestrial (radio access) networks is to complement the radio coverage - in a certain geographical area - provided by a terrestrial (radio access) network (in that considered geographical area), i.e. satellite networks or non-terrestrial networks will complement terrestrial cellular networks with the aim of using the non-terrestrial radio access network only where the radio coverage provided by the terrestrial radio access network is not sufficient (this also being called "white spots" of, or within, terrestrial radio access networks), thereby striving to provide - as much as possible and in case it is efficient to provide an increase in the user experience - a seamless service experience for user equipments or users of the mobile communication network.

However, in general, the capabilities and resulting data rates of non-terrestrial (radio access) networks compared to terrestrial (radio access) networks are likely to be limited, simply due to physical limitations, and - additionally and especially - the use of such non-terrestrial (radio access) networks likely requires more energy, e.g., per amount of data transmitted or per quality-of-service (especially latency) provided, compared to using terrestrial radio access networks. Typically, such required increased amounts of energy are necessary on both sides of the air interface, i.e. both at the user equipment as well as on the (radio access) network side.

In terrestrial mobile communication networks, the typical approach for providing radio coverage to a certain geographic area and/or to a certain number of user equipments is by means of using base station entities that are typically stationary and wherein each base station entity serves a radio cell (or a plurality of radio cells) that is (are) likewise typically rather stationary, i.e. a considered radio cell is typically roughly centered (or otherwise rather stationarily positioned) relative to an antenna entity of or associated with the considered base station entity that serves the considered radio cell or geographical area thereof. Of course, in case that a plurality of such base station entities are required - e.g. in view of a larger geographic area to be covered and/or in view of a higher (peak) demand for mobile communication services to be provided - a plurality of such mostly stationary base station entities are used, each one serving a radio cell (or a plurality of radio cells) that is (are) likewise typically rather stationary.

In order to complement (by means of a non-terrestrial (radio access) network) the radio coverage (or radio access network functionality) provided by a terrestrial (radio access) network in order to provide radio coverage also in such above-mentioned white spot-areas (of the terrestrial radio access network), conventionally known approaches within mobile communication networks mainly provide rather inflexible solutions or solutions requiring specifically configured user equipments or user interaction, such as, e.g., requiring manual interaction by the user, or relaying on app-based selection of the non-terrestrial network, or, alternatively, applying steering of user equipments (from the terrestrial radio access network (at loss of radio coverage) to the non-terrestrial radio access network) for all users (e.g. within a radio cell or beyond) in a similar manner, especially as the applied rules regarding (and defining) features or procedures such as public land mobile network selection, cell selection, or cell re-selection are applied for all user equipments irrespective of the individual situation thereof and especially without specifically taking into account complementing terrestrial radio access network functionality by means of non-terrestrial radio access network functionality.

Such known methods have for example been described in WO 2023/068458 A1, which suggests to allow a wireless device to perform a CHO evaluation for an NTN cell in a first time period, then stop the evaluation at the end of the first time period and perform cell selection upon detection of a radio link failure during a second time period. However, WO 2023/068458 A1 does not disclose a teaching according to which cell selections are suppressed during a time interval after a loss of radio coverage has been detected.

Furthermore, document US 2023/079636 A1 describes a method of supporting satellite wireless access by a user equipment while document US 2023/0121634 A1 describes a user equipment which may be configured to receive control signaling indicating a satellite visit time associated with one or more satellites . However, neither US 2023/079636 A1 nor 2023/0121634 A1 discloses that the delay time interval would be indicated or defined by a time to select satellite parameter or its information content.

### SUMMARY

An object of the present invention is to provide a technically simple, effective, cost-effective, and, especially, energy-saving solution for complementing terrestrial radio access network functionality by means of non-terrestrial radio access network functionality (i.e. by means of potentially switching (or not) the user equipment from being provided with radio access network functionality either by means of the terrestrial radio access network or by means of the non-terrestrial radio access network) in a manner such that the user experience - of a user or a user equipment used with a mobile communication network and/or for an energy-saving operation of the user equipment with the mobile communication network - is either enhanced or, at least, only reduced in the least possible way. A further object of the present invention is to provide a corresponding user equipment, a corresponding system or mobile communication network, and a corresponding program and computer-readable medium.

The object of the present invention is achieved by a method for an energy-saving operation of a user equipment with a mobile communication network, wherein the user equipment is provided communication services by the mobile communication network using a radio access network that provides radio coverage to the user equipment,
wherein at least a part of the radio access network corresponds to a terrestrial radio access network that provides radio coverage to the user equipment, wherein the user equipment is able to be provided additional radio coverage by means of a non-terrestrial radio access network, wherein the user equipment is able to switch from being provided with radio coverage either by means of the terrestrial radio access network or by means of the non-terrestrial radio access network,
characterized in that, in order to use or to operate the user equipment in a situation of a loss of radio coverage being provided by means of the terrestrial radio access network, the method comprises the following steps:
   -- in a first step, the user equipment is served by a terrestrial radio access network of a mobile communication network and detects a loss of radio coverage provided by the terrestrial radio access network,
   -- in a second step, subsequent to the detection of a loss of radio coverage, the user equipment applies a delay time interval prior to initiating a selection procedure at least with regard to a non-terrestrial radio access network, the selection procedure being according to one category of selection procedures,
   -- in a third step,
      -- in case that loss of radio coverage provided by the terrestrial radio access network is still detected upon expiry of the delay time interval, the user equipment initiates the selection procedure with regard to the non-terrestrial radio access network, and alternatively,
      -- in case that the user equipment regains radio coverage provided by the terrestrial radio access network, the user equipment continues to be served by the terrestrial radio access network,
wherein a time to select satellite parameter is used in order to indicate or define the delay time interval applied prior to initiating the selection procedure, wherein the delay time interval that is actually applied depends - in addition to the information content of the time to select satellite parameter - also on at least one out of the following:
   -- a mobility mode or a mobility state criterium of the user equipment, wherein the user equipment mobility mode or mobility state criterium is one out of the following:
      -- stationary or quasi-stationary or not moving,
      -- comparatively slow moving or normal-mobility state criterium,
      -- comparatively faster moving or medium-mobility state criterium,
      -- moving at high-speed or high-mobility state criterium, wherein the delay time interval that is actually applied is determined based on the information content of the time to select satellite parameter, wherein this value is increased or decreased dependent on the mobility mode of or the mobility state criterium applicable to the user equipment.

It is thereby advantageously possible according to the present invention to provide an optimized manner for complementing terrestrial radio access network functionality by means of non-terrestrial radio access network functionality. According to the present invention, this is done by means of timely modulating the initiation of at least one category of selection procedures (but preferably by means of timely modulating the initiation of all of the selection procedures regarding public land mobile network selection, cell selection and cell re-selection), which - in certain cases or scenarios of user equipments - results in switching the user equipment to being provided, typically temporarily, with radio access network functionality by means of the non-terrestrial radio access network instead of by means of the terrestrial radio access network (due to a detected loss of coverage by the terrestrial radio access network), and - in certain other cases or scenarios of user equipments - results in not switching towards the non-terrestrial radio access network (despite detected (temporary) loss of coverage by the terrestrial radio access network).

Hence, according to the present invention, it is advantageously possible to provide for a functionality that takes the current situation of the user equipment (at a certain location when the terrestrial radio access network is lost) into account in order to avoid to unnecessarily switch over from (being provided with radio coverage by means of) the terrestrial radio access network to (being provided with radio coverage by means of) the non-terrestrial radio access network and back to the terrestrial radio access network. In many situations, (radio coverage from) the terrestrial radio access network might be lost only temporarily, i.e. for comparatively short times (e.g., some seconds or - at most - a couple of minutes), especially for user equipments that are moving on the ground; in such situations, radio coverage provided by the terrestrial radio access network might be regained again quickly, and such a rather quick change (or switch of the user equipment) from the terrestrial radio access network to the non-terrestrial radio access network and back to the terrestrial radio access network could advantageously be avoided in order not only to minimize signaling effort (and, hence, network load), but also to minimize performing corresponding registration procedures, using related radiofrequency power and causing a waste of energy not only on the side of the user equipment but also regarding the (terrestrial and/or non-terrestrial) network.

Especially, the present invention addresses temporary losses of (radio coverage from) the terrestrial radio access network for user equipments that are moving, especially at different speeds.

According to the present invention, a user equipment is considered that is used with a mobile communication network, especially in order to provide for an energy-saving operation of the user equipment. The mobile communication network provides communication services to the user equipment using a radio access network that serves or provides radio coverage to the user equipment. At least a part of the radio access network (associated or assigned to the mobile communication network) corresponds to a terrestrial radio access network, i.e. the mobile communication network provides, using the assigned or associated radio access network, radio coverage and communication services (or, radio access network functionality) to the (considered) user equipment. Additional, or complemental, radio access network functionality is able to be provided, to the user equipment, by means of a non-terrestrial radio access network.

According to the present invention, it is not excluded that such non-terrestrial radio access network is a part of the radio access network (associated with or assigned to the mobile communication network), i.e. that the radio access network (of the mobile communication network) comprises both a terrestrial radio access network part and a non-terrestrial radio access network part; however, the main case according to the present invention is directed to a situation where (regarding the considered user equipment) the radio access network (associated with or assigned to the mobile communication network) is, or corresponds to, a terrestrial radio access network, and where the non-terrestrial radio access network (that is able to provide additional, or complemental, radio access network functionality to the (considered) user equipment) is not associated with or assigned to the mobile communication network (providing the radio access network) but to another mobile communication network.

Hence, in the context of the present invention, the term radio access network (of the mobile communication network) primarily refers to the terrestrial radio access network (part) associated with or assigned to the mobile communication network.

According to the present invention and as well as it is conventionally known, the (considered) user equipment (being located at a specific geographical location - and having a certain mobility state or state of movement) is able to switch (or to be switched) from being provided with radio access network functionality either by means of the terrestrial radio access network or by means of the non-terrestrial radio access network.

According to the present invention, in order to use or to operate the user equipment in a situation of low or inexistent radio access network functionality being provided or able to be provided by means of the terrestrial radio access network, the inventive method comprises all the steps of claim 1. Preferably according to the present invention, the user equipment applies - or, at least, is able to apply - the delay time interval prior to initiating a selection procedure at least with regard to the non-terrestrial radio access network, i.e. the user equipment applies, or - at least - is able to apply the delay time interval
-- prior to initiating the selection procedure both with regard to the terrestrial radio access network and with regard to the non-terrestrial radio access network, or
-- prior to initiating the selection procedure (only) with regard to the non-terrestrial radio access network.

Hence, according to the present invention, it is advantageously possible that - in situations of only rather short time periods of (detected) losses of radio coverage (being provided by the terrestrial radio access network), and due to the application of the delay time interval prior to performing (or initiating) the selection procedure at least with regard to the non-terrestrial radio access network - unnecessary switching of the user equipment, from the terrestrial radio access network to the non-terrestrial radio access network and back again to the terrestrial radio access network, are able to be avoided, thereby, especially, saving the required amount of energy (especially on the user equipment side) for conducting such two switching operations, forth and back.

According to the present invention, it is advantageously possible and preferred that the selection procedure whose initiation is delayed, in the second step, by the application of the delay time interval corresponds to at least one out of the following, preferably to all out of the following:
-- a public land mobile network selection procedure,
-- a cell selection procedure,
-- a cell re-selection procedure.

It is thereby advantageously possible to realize and implement the inventive method in a comparatively simple and efficient manner.

According to the present invention, it is advantageously furthermore possible and preferred that the delay time interval actually applied corresponds to - or is, at least partly, defined by or dependent on - a time to select satellite parameter, TSS parameter, or its information content, wherein the time to select satellite parameter is received, by the user equipment, from a base station entity of the terrestrial radio access network and especially from the base station entity serving the user equipment at, or prior to, the point in time when, during the first step, the user equipment detects the loss of radio coverage.

It is thereby advantageously possible to realize and implement the inventive method in a comparatively simple and efficient manner.

According to the present invention, it is furthermore advantageously possible and preferred that the delay time interval that is actually applied depends on
-- a user-defined and/or network-defined and/or service-defined individual or dedicated setting solely, or
-- the user-defined and/or network-defined and/or service-defined individual or dedicated setting in addition to the information content of the time to select satellite parameter.

It is thereby advantageously possible to realize and implement the inventive method in a comparatively simple and efficient manner.

Furthermore, it is advantageously possible and preferred according to the present invention that the time to select satellite parameter is received by the user equipment from a broadcast of the base station entity currently or previously serving the user equipment,
wherein a broadcast channel is used to transmit the time to select satellite parameter,
wherein this broadcasting is performed using a system information block that is relevant for all user equipments in the considered radio cell.

It is thereby advantageously possible to realize and implement the inventive method in a comparatively simple and efficient manner.

According to the present invention, it is furthermore advantageously possible and preferred that the time to select satellite parameter is received by the user equipment (20) from the base station entity currently or previously serving the user equipment by means of using a dedicated signaling channel,
wherein especially the time to select satellite parameter is received as part of one out of the following:
-- the registration process of the user equipment with the mobile communication network and/or the terrestrial radio access network,
-- a regular non-access stratum procedure of the user equipment with the mobile communication network and/or the terrestrial radio access network, especially a tracking area update, TAU, procedure,
-- a regular access stratum procedure of the user equipment with the mobile communication network and/or the terrestrial radio access network, especially a measurement control procedure.

It is thereby advantageously possible to realize and implement the inventive method in a comparatively simple and efficient manner.

Furthermore, it is advantageously possible and preferred according to the present invention that the time to select satellite parameter is stored in a memory element or module of or within the user equipment and/or
wherein one specific information content of the time to select satellite parameter is such that the time to select satellite parameter indicates - in case of having this specific information content - that the delay time interval applied in the second step is set to zero or corresponds to zero seconds, resulting in the user equipment immediately initiating the selection procedure with regard to the non-terrestrial radio access network if it detects a loss of radio coverage provided by the terrestrial radio access network.

It is thereby advantageously possible to realize and implement the inventive method in a comparatively simple and efficient manner.

According to the present invention, it is furthermore advantageously possible and preferred that the information content of the time to select satellite parameter is such that the time to select satellite parameter indicates - in case of having this specific information content - that the delay time interval corresponds to 10 seconds, or to 20 seconds, or to 30 seconds, or to other multiples of 10 seconds, especially up to 360 seconds.

It is thereby advantageously possible to realize and implement the inventive method in a comparatively simple and efficient manner.

Furthermore, the present invention relates to a user equipment arranged for being operated according to an energy-saving configuration of the user equipment with the mobile communication network, wherein the user equipment is configured to be provided communication services by the mobile communication network using a radio access network that provides radio coverage to the user equipment, at least a part of the radio access network corresponding to a terrestrial radio access network that provides radio coverage to the user equipment, wherein the user equipment is furthermore configured such that additional radio coverage is able to be provided, to the user equipment, by means of a non-terrestrial radio access network, wherein the user equipment is able to switch from being provided with radio coverage either by means of the terrestrial radio access network or by means of the non-terrestrial radio access network,
characterized in that, in order to use the user equipment in a situation of a loss of radio coverage provided by means of the terrestrial radio access network, the user equipment is configured such that:
-- the user equipment, in case that the user equipment- while being served by the terrestrial radio access network of the mobile communication network - detects a loss of radio coverage provided by the terrestrial radio access network, subsequently applies a delay time interval prior to initiating a selection procedure at least with regard to the non-terrestrial radio access network, the selection procedure being according to one category of selection procedures, wherein
   -- in case that loss of radio coverage provided by the terrestrial radio access network is still detected upon expiry of the delay time interval, the user equipment initiates a cell selection procedure with regard to the non-terrestrial radio access network, and otherwise,
   -- in case that the user equipment regains radio coverage provided by the terrestrial radio access network, the user equipment continues to be served by the terrestrial radio access network, wherein a time to select satellite parameter is used in order to indicate or define the delay time interval applied prior to initiating the selection procedure, wherein the delay time interval that is actually applied depends - in addition to the information content of the time to select satellite parameter - also on at least one out of the following:
-- a mobility mode or a mobility state criterium of the user equipment, wherein the user equipment mobility mode or mobility state criterium is one out of the following:
   -- stationary or quasi-stationary or not moving,
   -- comparatively slow moving or normal-mobility state criterium,
   -- comparatively faster moving or medium-mobility state criterium,
   -- moving at high-speed or high-mobility state criterium, wherein the delay time interval that is actually applied is determined based on the information content of the time to select satellite parameter, wherein this value is increased or decreased dependent on the mobility mode of or the mobility state criterium applicable to the user equipment.

Additionally, the present invention relates to a program comprising a computer readable program code which, when executed on a computer and/or on a user equipment and/or on a network node of a mobile communication network, or in part on a user equipment and/or in part on the network node of the mobile communication network, causes the computer and/or the user equipment and/or the network node of the mobile communication network to perform the inventive method.

Still additionally, the present invention relates to a computer-readable medium comprising instructions which when executed on a computer and/or on a user equipment and/or on a network node of a mobile communication network, or in part on a user equipment and/or in part on the network node of the mobile communication network, causes the computer and/or the user equipment and/or the network node of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

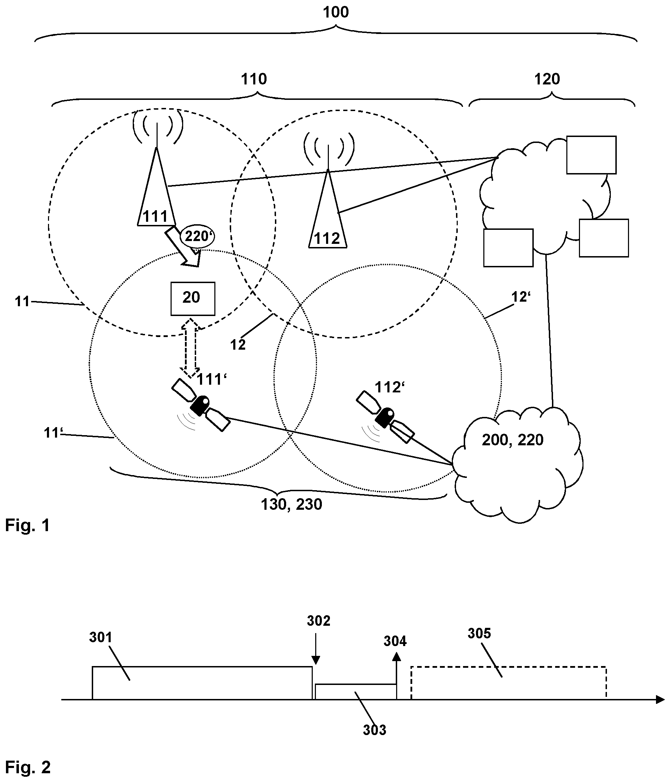

Figure 1 schematically illustrates the situation of a user equipment in a mobile communication network wherein the mobile communication network comprises a radio access network with at least a terrestrial radio access network (part) that is able to provide the user equipment with radio access network functionality, wherein, furthermore, the user equipment is able to be provided with radio access network functionality by means of a non-terrestrial radio access network, that is able to complement the radio coverage provided by the terrestrial radio access network.
Figure 2 schematically and exemplarily illustrates timing details that are related to the method - and that are applied by the inventive user equipment - according to the present invention.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 comprising an access network, and a core network 120 is schematically shown. The telecommunications network 100 or also mobile communication network 100 is typically realized as a cellular network or cellular mobile communication network 100. The mobile communication network 100, especially the core network 120, typically comprises a number of network functions or services that are not specifically indicated by means of a reference sign. The access network 110 or radio access network 110 comprises a plurality of radio cells 11, 12, i.e. geographical areas served, respectively, by base station entities. In the exemplary situation or scenario shown in Figure 1, a first base station entity 111 generates or is associated with or spans the first (terrestrial) radio cell 11, and a second base station entity 112 generates or is associated with or spans the second (terrestrial) radio cell 12 (the first and second (terrestrial) radio cells 11, 12 being represented, in Figure 1, by means of dashed circles around the first and second base station entities 111, 112, respectively). The base station entities 111, 112 typically realize gNB functionality or next-generation gNB functionality. The mobile communication network 100 is typically connected to a plurality of user equipments (or, rather, the user equipments are connected to the telecommunications network 100). Figure 1 schematically only shows one user equipment 20, i.e. the situation of that user equipment 20 is represented in the communication network 100, whose (above mentioned) radio access network 110 is realized as a terrestrial radio access network 110, i.e. the radio access network 110 realizes the terrestrial radio access network (part) of the mobile communication network 100 (that is able to provide the user equipment 20 with radio access network functionality).

Figure 1 additionally shows a non-terrestrial radio access network which is preferably realized, according to the present invention, by means of (or as) a satellite radio access network or satellite non-terrestrial radio access network. The non-terrestrial radio access network is designated by means of reference sign 130 in case that the non-terrestrial radio access network is part of the mobile communication network 100 (i.e. part of the radio access network of that mobile communication network 100, comprising both the terrestrial radio access network 110, and the non-terrestrial radio access network 130). However, while this latter configuration is possible, the present invention nevertheless mainly addresses a configuration where the non-terrestrial radio access network is not part of the mobile communication network 100 but part of a further telecommunications network 200, or a further mobile communication network 200 (also comprising a further core network 220, both the further corer network 220 and the further mobile communication network 200 being schematically represented, in Figure 1, by means of a cloud representation 200, 220, the further mobile communication network 200 being connected to the core network 120 of the mobile communication network 100 and the further core network 220 being connected to the non-terrestrial radio access network), in which case the non-terrestrial radio access network is designated by means of reference sign 230.

In any case, the user equipment 20 is able to be provided with radio access network functionality both by means of the terrestrial radio access network 110 and by means of the non-terrestrial radio access network 130, 230, and the non-terrestrial radio access network 130, 230 is especially able to complement the radio coverage provided by the terrestrial radio access network 110. The non-terrestrial radio access network 130, 230 likewise comprises base station entities (or, at least, antenna entities or functionalities) that are schematically and exemplarily represented, in Figure 1, as a first satellite 111' and a second satellite 112', wherein the first satellite 111' provides radio coverage in a first satellite (or non-terrestrial) radio cell 11' and the second satellite 112' provides radio coverage in a second satellite (or non-terrestrial) radio cell 12' (the first and second satellite (non-terrestrial) radio cells 11', 12' being represented, in Figure 1, by means of dotted circles around the first and second satellites 111', 112', respectively).

Figure 1 specifically shows the situation where the user equipment 20 is connected with, or served by, the first (terrestrial) base station entity 111 as part of the terrestrial radio access network 110.

Hence, according to the present invention, the mobile communication network 100 provides communication services to the user equipment 20 using the terrestrial radio access network 110 that provides radio access network functionality to the user equipment 20. Additionally, and complementary, radio access network functionality is able to be provided, to the user equipment 20, by means of the non-terrestrial radio access network 130, 230; furthermore, the user equipment 20 is able to switch (or to be switched) between the terrestrial radio access network 110 and the non-terrestrial radio access network 130, 230 (i.e. from being provided with radio access network functionality either by means of the terrestrial radio access network 110 or by means of the non-terrestrial radio access network 130, 230). In a situation of low or inexistent radio access network functionality being provided (or able to be provided) by means of the terrestrial radio access network 110 (and/or able to be received by the user equipment 20), it is proposed according to the present invention that - after the user equipment 20 detecting such loss of radio coverage - a delay time interval is applied by the user equipment 20 prior to initiating a selection procedure.

This is schematically illustrated in Figure 2 which exemplarily shows timing details that are related to the inventive method and inventive user equipment 20: It is assumed that the (considered) user equipment 20 is served (during a certain time period) by the terrestrial radio access network 110. This is schematically illustrated, in Figure 2, by means of reference sign 301 on the left-most portion of a horizonal arrow schematically indicating the evolution of time. At a certain point in time, this radio coverage (provided by the terrestrial radio access network 110) ends or becomes insufficient (especially, but not limited to, due to the user equipment 20 moving towards a peripheral part of the corresponding radio cell) and, at a point in time indicated by an arrow and reference sign 302, such loss of radio coverage is detected by the user equipment 20 (first step of the inventive method).

In such a situation in a conventionally known mobile communication network, such a user equipment is typically configured such that it would almost immediately start (or initiate) with selection procedures, such as a cell re-selection procedure and/or a cell selection procedure and/or a public land mobile network selection procedure.

According to the present invention, the user equipment 20 is configured such that, subsequently - i.e. after the above-mentioned detection of a loss of radio coverage provided by the terrestrial radio access network 110 -, the user equipment 20 applies a delay time interval prior to initiating a selection procedure (second step of the inventive method). In Figure 2, the delay time interval is indicated by means of reference sign 303 and the point in time at which the selection procedure is initiated (by the user equipment 20) is indicated by means of reference sign 304.

Subsequently, the (considered) user equipment 20 is served (during a certain time period, schematically illustrated, in Figure 2, by means of reference sign 305 on the rightmost portion of the horizonal arrow indicating time evolution) by either the non-terrestrial radio access network 130, 230 or by the terrestrial radio access network 110; these two possibilities being represented, in Figure 2, by means of the time portion 305 being illustrated by means of a dashed line; furthermore, the time portion 305 is illustrated by means of a dashed line as it is contemplated that its beginning is (temporally) moved further to 'the left' i.e. towards, or in the direction of, the point in time 302 (when the loss of radio coverage is detected):
According to the present invention, in case that (the situation of) loss of radio coverage (provided by the terrestrial radio access network 110) is still detected upon expiry of the delay time interval 303 (as shown in Figure 2), the user equipment 20 initiates the selection procedure 304 with regard to the non-terrestrial radio access network 130, 230; however, in case that the user equipment 20 regains its radio coverage (provided by the terrestrial radio access network 110) - this corresponding to the time portion 305 (shown in Figure 2, at least its beginning) being moved 'to the left' (compared to the representation of Figure 2), at least beyond the end of the delay time interval 303 -, the user equipment 20 continues to be served by the terrestrial radio access network 110, i.e. despite there having been a loss of coverage 302 detected by the user equipment 20, due to applying the delay time interval 303 prior to initiating a potential selection procedure 304 (at the end of the delay time interval 303), no switch towards the non-terrestrial radio access network 130, 230 has been initiated (and no preparatory selection procedure performed), thus saving energy resources at least at the side of the user equipment 20.

Hence, in a third step of the inventive method, in case that the loss of radio coverage (provided by the terrestrial radio access network 110) is still detected upon expiry of the delay time interval 303, the user equipment 20 initiates the selection procedure 304 with regard to the non-terrestrial radio access network 130, 230, and alternatively, in case that the user equipment 20 regains radio coverage provided by the terrestrial radio access network 110, the user equipment 20 continues to be served by the terrestrial radio access network 110. Thus, as one of these two possibility necessarily occurs, it could also have been worded such that, in the third step, one out of the following two scenarios is applied:
-- the loss of radio coverage (provided by the terrestrial radio access network 110) is still detected upon expiry of the delay time interval 303, leading to the user equipment 20 initiating the selection procedure 304 with regard to the non-terrestrial radio access network 130, 230, and
-- the user equipment 20 regains radio coverage provided by the terrestrial radio access network 110 (the detected loss of coverage 302 is terminated) and the user equipment 20 continues to be served by the terrestrial radio access network 110.

According to the present invention, the selection procedure 304 is according to one category of selection procedures or according to a plurality of categories of selection procedures. Preferably, the selection procedure 304 whose initiation is delayed, in the second step, by the application of the delay time interval 303 corresponds to at least one out of the following, preferably to all out of the following:
-- a public land mobile network selection procedure,
-- a cell selection procedure,
-- a cell re-selection procedure.

Especially according to the present invention, the delay time interval 303 that is actually applied corresponds to - or is, at least partly, defined by or dependent on - a time to select satellite parameter, TSS parameter, or its information content, the delay time interval or this time to select satellite parameter being schematically represented, in Figure 1, by means of reference sign 220.

Hence, in order to prevent the unnecessary change (of the user equipment 20) from the terrestrial radio access network 110 to the non-terrestrial radio access network 130, 230 and back to the terrestrial radio access network 110 (and thus minimizing signaling, registration (procedures), related radiofrequency power and waste of energy of the user equipment 20), the present invention proposes to use the time to select satellite parameter in order to indicate, or define, the delay time interval 303 applied in (or prior to) mobility procedures of cellular user equipments interworking between terrestrial radio access networks and non-terrestrial radio access networks. According to the present invention, the time to select satellite parameter / delay time interval 303 is especially used as follows (pseudo code):

```
  IF the terrestrial radio access network 110 (TN) is lost (302)
      Start timer TSS (i.e. the delay time interval 303, defined by means of the time to
      select satellite parameter 202);
  IF timer TSS expired
      Start search for NON-TERRESTRIAL NETWORK (i.e. start or initiate the selection
      procedure 304)
  ELSE proceed normally (i.e. the user equipment 20 continues to be served by the
  terrestrial radio access network 110)
```

It is preferred according to the present invention that the time to select satellite parameter 220 is received, by the user equipment 20, from the terrestrial radio access network 110, especially from a base station entity 111 thereof and especially from the base station entity 111 serving the user equipment 20 at, or prior to, the point in time when, during the first step, the user equipment 20 detects the loss of radio coverage.

It is furthermore preferred according to the present invention that the delay time interval corresponds to - and/or that the time to select satellite parameter 220 indicates a time interval (TSS timer) of - 2s or 3s or 4s or 5s or 6s or 8s or 10s or 20s or 30s or other multiples of 10s, especially up to 360 seconds.

However, it is especially possible according to the present invention, that - at least in specific situations of the user equipment 20, e.g. high-speed situations or premium customers or the like - the time to select satellite parameter 220 indicates a length of the delay time interval 303 of zero seconds, i.e. in such situations, and despite the time to select satellite parameter 220 being transmitted, the delay time interval is logically applied but - as its temporal length corresponds to zero - no delay time interval is actually (or physically) applied; hence, it should be possible, according to the present invention, that one specific information content of the time to select satellite parameter 220 is such that the time to select satellite parameter 220 indicates - in case of having this specific information content - that the delay time interval 303 (logically) applied in the second step is set to zero or corresponds to zero seconds, resulting in the user equipment 20 immediately initiating the selection procedure 304 with regard to the non-terrestrial radio access network 130, 230 if it detects a loss of radio coverage provided by the terrestrial radio access network 110.

Furthermore especially, the time to select satellite parameter 220 is either broadcast in a radio cell on a broadcast channel BCH, e.g. the broadcast control channel, of the serving radio cell in an appropriate system information block, SIB, especially in a system information block relevant for all user equipments within that (considered) radio cell; alternatively, the time to select satellite parameter 220 is sent using dedicated signaling to the user equipment 20 (either as part of the registration procedures, or as part of a regular non-access stratum procedure as for example a tracking area update (TAU), which can also be used to configure equivalent public land mobile network (ePLMN) functionality to the user equipment 20.

Especially, the present invention is applied to moving user equipments especially in geographical areas where the terrestrial radio access network radio coverage might be lost temporarily and is regained shortly after (e.g. due to tunnels, shading effects etc.). Furthermore, it is preferred according to the present invention that either the user (of the user equipment 20) or the (mobile communication) network 100 or the service (e.g. of an application) (or a mix thereof) is able to set (i.e. to modify) the time to select satellite parameter 220, and, as a consequence, also the length of the delay time interval 303 applied (e.g. by means of a preference such as "immediately change to sat network/non-terrestrial radio access network" or "delayed change to sat network/non-terrestrial radio access network").

## Claims

1. Method for an energy-saving operation of a user equipment (20) with a mobile communication network (100), wherein the user equipment (20) is provided communication services by the mobile communication network (100) using a radio access network that provides radio coverage to the user equipment (20), wherein at least a part of the radio access network corresponds to a terrestrial radio access network (110) that provides radio coverage to the user equipment (20), wherein the user equipment (20) is able to be provided additional radio coverage by means of a non-terrestrial radio access network (130, 230), wherein the user equipment (20) is able to switch from being provided with radio coverage either by means of the terrestrial radio access network (110) or by means of the non-terrestrial radio access network (130, 230),
wherein in order to use or to operate the user equipment (20) in a situation of a loss of radio coverage being provided by means of the terrestrial radio access network (110), the method comprises the following steps:
-- in a first step, the user equipment (20) is served (301) by a terrestrial radio access network (110) of a mobile communication network (100) and detects a loss of radio coverage (302) provided by the terrestrial radio access network (110),
-- in a second step, subsequent to the detection of a loss of radio coverage (302), the user equipment (20) applies a delay time interval (303) prior to initiating a selection procedure (304) at least with regard to a non-terrestrial radio access network (130, 230), the selection procedure (304) being according to one category of selection procedures,
-- in a third step,
-- in case that loss of radio coverage provided by the terrestrial radio access network (110) is still detected upon expiry of the delay time interval (303), the user equipment (20) initiates the selection procedure (304) with regard to the non-terrestrial radio access network (130, 230), and otherwise
-- in case that the user equipment (20) regains radio coverage provided by the terrestrial radio access network (110), the user equipment (20) continues to be served by the terrestrial radio access network (110),
wherein a time to select satellite parameter is used in order to indicate or define the delay time interval (303) applied prior to initiating the selection procedure (304), **characterized in that**
the delay time interval (303) that is actually applied depends - in addition to the information content of the time to select satellite parameter (220) - also on at least one out of the following:
-- a mobility mode or a mobility state criterium of the user equipment (20),
wherein the user equipment mobility mode or mobility state criterium is one out of the following:
-- stationary or quasi-stationary or not moving,
-- comparatively slow moving or normal-mobility state criterium,
-- comparatively faster moving or medium-mobility state criterium,
-- moving at high-speed or high-mobility state criterium, wherein the delay time interval (303) that is actually applied is determined based on the information content of the time to select satellite parameter (220), wherein this value is increased or decreased dependent on the mobility mode of or the mobility state criterium applicable to the user equipment (20).

2. Method according to claim 1, wherein the selection procedure (304) whose initiation is delayed, in the second step, by the application of the delay time interval (303) corresponds to at least one out of the following::
-- a public land mobile network selection procedure,
-- a cell selection procedure,
-- a cell re-selection procedure.

3. Method according to one of the preceding claims, wherein the time to select satellite parameter (220) is received, by the user equipment (20), from a base station entity (111) of the terrestrial radio access network (110) and especially from the base station entity (111) serving the user equipment (20) at, or prior to, the point in time when, during the first step, the user equipment (20) detects the loss of radio coverage.

4. Method according to one of the preceding claims, wherein the delay time interval (303) that is actually applied depends on
-- a user-defined and/or network-defined and/or service-defined individual or dedicated setting solely, or
-- the user-defined and/or network-defined and/or service-defined individual or dedicated setting in addition to the information content of the time to select satellite parameter (220).

5. Method according to one of the preceding claims, wherein the time to select satellite parameter (220) is received by the user equipment from a broadcast of the base station entity (111) currently or previously serving the user equipment (20),
wherein a broadcast channel is used to transmit the time to select satellite parameter (220), wherein this broadcasting is performed using a system information block that is relevant for all user equipments in the considered radio cell.

6. Method according to one of the preceding claims, wherein the time to select satellite parameter (220) is received by the user equipment (20) from the base station entity (111) currently or previously serving the user equipment (20) by means of using a dedicated signaling channel,
wherein especially the time to select satellite parameter (220) is received as part of one out of the following:
-- the registration process of the user equipment (20) with the mobile communication network (100) and/or the terrestrial radio access network (110),
-- a regular non-access stratum procedure of the user equipment (20) with the mobile communication network (100) and/or the terrestrial radio access network (110), especially a tracking area update, TAU, procedure,
-- a regular access stratum procedure of the user equipment (20) with the mobile communication network (100) and/or the terrestrial radio access network (110), especially a measurement control procedure.

7. Method according to one of the preceding claims, wherein the time to select satellite parameter (220) is stored in a memory element or module of the user equipment (20) and wherein one specific information content of the time to select satellite parameter (220) is such that the time to select satellite parameter (220) indicates - in case of having this specific information content - that the delay time interval (303) applied in the second step corresponds to zero seconds, resulting in the user equipment (20) immediately initiating the selection procedure (304) with regard to the non-terrestrial radio access network (130, 230) if it detects a loss of radio coverage provided by the terrestrial radio access network (110).

8. Method according to one of the preceding claims, wherein the information content of the time to select satellite parameter (220) is such that the time to select satellite parameter (220) indicates - in case of having this specific information content - that the delay time interval (303) corresponds to 2 seconds or to 3 seconds or to 4 seconds or to 5 seconds or to 6 seconds or to 8 seconds or to 10 seconds, or to 20 seconds, or to 30 seconds, or to other multiples of 10 seconds, especially up to 360 seconds.

9. User equipment (20) arranged for being operated according to an energy-saving configuration of the user equipment (20) with the mobile communication network (100), wherein the user equipment (20) is configured to be provided communication services by the mobile communication network (100) using a radio access network that provides radio coverage to the user equipment (20), at least a part of the radio access network corresponding to a terrestrial radio access network (110) that provides radio coverage to the user equipment (20), wherein the user equipment (20) is furthermore configured such that additional radio coverage is able to be provided, to the user equipment (20), by means of a non-terrestrial radio access network (130, 230), wherein the user equipment (20) is able to switch from being provided with radio coverage either by means of the terrestrial radio access network (110) or by means of the non-terrestrial radio access network (130, 230),
wherein in order to use the user equipment (20) in a situation of a loss of radio coverage provided by means of the terrestrial radio access network (110),the user equipment (20) is configured such that:
-- the user equipment (20), in case that the user equipment (20) - while being served by the terrestrial radio access network (110) of the mobile communication network (100) - detects a loss of radio coverage (302) provided by the terrestrial radio access network (110), subsequently applies a delay time interval (303) prior to initiating a selection procedure (304) at least with regard to the non-terrestrial radio access network (130, 230), the selection procedure (304) being according to one category of selection procedures, wherein
-- in case that loss of radio coverage provided by the terrestrial radio access network (110) is still detected upon expiry of the delay time interval (303), the user equipment (20) initiates a cell selection procedure (304) with regard to the non-terrestrial radio access network (130, 230), and otherwise,
-- in case that the user equipment (20) regains radio coverage provided by the terrestrial radio access network (110), the user equipment (20) continues to be served by the terrestrial radio access network (110), , wherein a time to select satellite parameter is used in order to indicate or define the delay time interval (303) applied prior to initiating the selection procedure (304), **characterized in that** the delay time interval (303) that is actually applied depends - in addition to the information content of the time to select satellite parameter (220) - also on at least one out of the following:
-- a mobility mode or a mobility state criterium of the user equipment (20),
wherein the user equipment mobility mode or mobility state criterium is one out of the following:
-- stationary or quasi-stationary or not moving,
-- comparatively slow moving or normal-mobility state criterium,
-- comparatively faster moving or medium-mobility state criterium,
-- moving at high-speed or high-mobility state criterium, wherein the delay time interval (303) that is actually applied is determined based on the information content of the time to select satellite parameter (220), wherein this value is increased or decreased dependent on the mobility mode of or the mobility state criterium applicable to the user equipment (20)..

10. Program comprising a computer readable program code, which, when executed on a user equipment (20),causes the user equipment (20) to perform a method according one of claims 1 to 8.

11. Computer-readable medium comprising instructions which when executed on a user equipment (20), causes the user equipment (20) to perform a method according one of claims 1 to 8.

## Patentansprüche

1. Verfahren für einen energiesparenden Betrieb eines Nutzergeräts (20) mit einem mobilen Kommunikationsnetz (100), wobei dem Nutzergerät (20) Kommunikationsdienste durch das mobile Kommunikationsnetz (100) unter Verwendung eines Funkzugangsnetzes bereitgestellt werden, das Funkabdeckung für das Nutzergerät (20) bietet, wobei mindestens ein Teil des Funkzugangsnetzes einem terrestrischen Funkzugangsnetz (110) entspricht, das Funkabdeckung für das Nutzergerät (20) bereitstellt, wobei dem Nutzergerät (20) zusätzliche Funkabdeckung mittels eines nicht-terrestrischen Funkzugangsnetzes (130, 230) bereitgestellt werden kann, wobei das Nutzergerät (20) zwischen der Bereitstellung von Funkabdeckung entweder mittels des terrestrischen Funkzugangsnetzes (110) oder mittels des nicht-terrestrischen Funkzugangsnetzes (130, 230) wechseln kann, wobei zur Nutzung oder zum Betrieb des Nutzergeräts (20) in einer Situation eines Verlusts der Funkabdeckung, die mittels des terrestrischen Funkzugangsnetzes (110) bereitgestellt wird, das Verfahren die folgenden Schritte umfasst:
-- in einem ersten Schritt wird das Nutzergerät (20) von einem terrestrischen Funkzugangsnetz (110) eines mobilen Kommunikationsnetzes (100) versorgt (301) und erkennt einen Verlust der Funkabdeckung (302), der vom terrestrischen Funkzugangsnetz (110) bereitgestellt wird,
-- in einem zweiten Schritt wendet das Nutzergerät (20) nach der Erkennung eines Verlusts der Funkabdeckung (302) ein Verzögerungszeitintervall (303) an, bevor es ein Auswahlverfahren (304) zumindest bezüglich eines nicht-terrestrischen Funkzugangsnetzes (130, 230) einleitet, wobei das Auswahlverfahren (304) einer Kategorie von Auswahlverfahren entspricht,
-- in einem dritten Schritt,
-- falls Verlust der Funkabdeckung, die vom terrestrischen Funkzugangsnetz (110) bereitgestellt wird, nach Ablauf des Verzögerungszeitintervalls (303) noch immer erkannt wird, leitet das Nutzergerät (20) das Auswahlverfahren (304) bezüglich des nicht-terrestrischen Funkzugangsnetzes (130, 230) ein, und anderenfalls
-- falls das Nutzergerät (20) die Funkabdeckung des terrestrischen Funkzugangsnetzes (110) wiedererlangt, wird das Nutzergerät (20) weiterhin vom terrestrischen Funkzugangsnetz (110) versorgt, wobei ein Zeit-zur-Satellitenauswahl-Parameter verwendet wird, um das Verzögerungszeitintervall (303) zu indizieren oder zu definieren, das vor der Einleitung des Auswahlverfahrens (304) angewendet wird, **dadurch gekennzeichnet, dass** das Verzögerungszeitintervall (303), das tatsächlich angewendet wird, auch -- zusätzlich zum Informationsgehalt des Zeit-zur-Satellitenauswahl-Parameters (220) -- von mindestens einem der folgenden Faktoren abhängt:
-- einem Mobilitätsmodus oder einem Mobilitätszustandskriterium des Nutzergeräts (20), wobei der Mobilitätsmodus oder das Mobilitätszustandskriterium des Nutzergeräts eines der folgenden ist:
-- stationär oder quasi-stationär oder sich nicht bewegend,
-- vergleichsweise langsam bewegend oder Normal-Mobilitätszustandskriterium,
-- vergleichsweise schneller bewegend oder Mittel-Mobilitätszustandskriterium,
-- sich mit hoher Geschwindigkeit bewegend oder Hoch-Mobilitätszustandskriterium, wobei das Verzögerungszeitintervall (303), das tatsächlich angewendet wird, basierend auf dem Informationsgehalt des Zeit-zur-Satellitenauswahl-Parameters (220) bestimmt wird, wobei dieser Wert abhängig vom Mobilitätsmodus oder dem Mobilitätszustandskriterium, das für das Nutzergerät (20) gilt, erhöht oder verringert wird.

2. Verfahren nach Anspruch 1, wobei das Auswahlverfahren (304), dessen Einleitung im zweiten Schritt durch die Anwendung des Verzögerungszeitintervalls (303) verzögert wird, mindestens einem der folgenden entspricht:
-- einem öffentlichen Landmobilnetz-Auswahlverfahren,
-- einem Zellauswahlverfahren,
-- einem Zellneuwahl-Verfahren.

3. Verfahren nach einem der vorhergehenden Ansprüche, wobei der Zeit-zur-Satellitenauswahl-Parameter (220) vom Nutzergerät (20) von einer Basisstationseinheit (111) des terrestrischen Funkzugangsnetzes (110) und insbesondere von der Basisstationseinheit (111), die das Nutzergerät (20) zum Zeitpunkt oder vor dem Zeitpunkt versorgt, zu dem das Nutzergerät (20) während des ersten Schritts den Verlust der Funkabdeckung erkennt, empfangen wird.

4. Verfahren nach einem der vorhergehenden Ansprüche, wobei das Verzögerungszeitintervall (303), das tatsächlich angewendet wird, abhängt voneiner benutzerdefinierter und/oder netzwerkdefinierten und/oder dienstdefinierten individuellen oder dedizierten Einstellung allein, oder -- der benutzerdefinierte und/oder netzwerkdefinierte und/oder dienstdefinierte individuelle oder dedizierte Einstellung zusätzlich zum Informationsgehalt des Zeit-zur-Satellitenauswahl-Parameters (220).

5. Verfahren nach einem der vorhergehenden Ansprüche, wobei der Zeit-zur-Satellitenauswahl-Parameter (220) vom Nutzergerät von einer Übertragung der Basisstationseinheit (111), die das Nutzergerät (20) derzeit oder zuvor versorgt, empfangen wird, wobei ein Übertragungskanal verwendet wird, um den Zeit-zur-Satellitenauswahl-Parameter (220) zu übertragen, wobei diese Übertragung unter Verwendung eines Systeminformationsblocks durchgeführt wird, der für alle Nutzergeräte in der betrachteten Funkzelle relevant ist.

6. Verfahren nach einem der vorhergehenden Ansprüche, wobei der Zeit-zur-Satellitenauswahl-Parameter (220) vom Nutzergerät (20) von der Basisstationseinheit (111), die das Nutzergerät (20) derzeit oder zuvor versorgt, mittels Verwendung eines dedizierten Signalisierungskanals empfangen wird, wobei insbesondere der Zeit-zur-Satellitenauswahl-Parameter (220) als Teil eines der folgenden empfangen wird:des Registrierungsprozesses des Nutzergeräts (20) mit dem mobilen Kommunikationsnetz (100) und/oder dem terrestrischen Funkzugangsnetz (110),eines regelmäßigen Nicht-Zugangsschicht-Verfahrens des Nutzergeräts (20) mit dem mobilen Kommunikationsnetz (100) und/oder dem terrestrischen Funkzugangsnetz (110), insbesondere eines Tracking-Area-Updates, TAU-Verfahrens, -- eines regelmäßigen Zugangsschicht-Verfahrens des Nutzergeräts (20) mit dem mobilen Kommunikationsnetz (100) und/oder dem terrestrischen Funkzugangsnetz (110), insbesondere eines Messsteuerungsverfahrens.

7. Verfahren nach einem der vorhergehenden Ansprüche, wobei der Zeit-zur-Satellitenauswahl-Parameter (220) in einem Speicherelement oder Modul des Nutzergeräts (20) gespeichert wird und wobei ein spezifischer Informationsgehalt des Zeit-zur-Satellitenauswahl-Parameters (220) derart ist, dass der Zeit-zur-Satellitenauswahl-Parameter (220) -- falls er diesen spezifischen Informationsgehalt hat -- anzeigt, dass das Verzögerungszeitintervall (303), das im zweiten Schritt angewendet wird, null Sekunden entspricht, was dazu führt, dass das Nutzergerät (20) sofort das Auswahlverfahren (304) bezüglich des nicht-terrestrischen Funkzugangsnetzes (130, 230) einleitet, falls es einen Verlust der Funkabdeckung erkennt, die vom terrestrischen Funkzugangsnetz (110) bereitgestellt wird.

8. Verfahren nach einem der vorhergehenden Ansprüche, wobei der Informationsgehalt des Zeit-zur-Satellitenauswahl-Parameters (220) derart ist, dass der Zeit-zur-Satellitenauswahl-Parameter (220) -- falls er diesen spezifischen Informationsgehalt hat -- anzeigt, dass das Verzögerungszeitintervall (303) 2 Sekunden oder 3 Sekunden oder 4 Sekunden oder 5 Sekunden oder 6 Sekunden oder 8 Sekunden oder 10 Sekunden oder 20 Sekunden oder 30 Sekunden oder anderen Vielfachen von 10 Sekunden entspricht, insbesondere bis zu 360 Sekunden.

9. Nutzergerät (20), das für den Betrieb gemäß einer energiesparenden Konfiguration des Nutzergeräts (20) mit dem mobilen Kommunikationsnetz (100) angeordnet ist, wobei das Nutzergerät (20) so konfiguriert ist, dass ihm Kommunikationsdienste durch das mobile Kommunikationsnetz (100) unter Verwendung eines Funkzugangsnetzes bereitgestellt werden, das Funkabdeckung für das Nutzergerät (20) bietet, wobei mindestens ein Teil des Funkzugangsnetzes einem terrestrischen Funkzugangsnetz (110) entspricht, das Funkabdeckung für das Nutzergerät (20) bereitstellt, wobei das Nutzergerät (20) ferner so konfiguriert ist, dass zusätzliche Funkabdeckung dem Nutzergerät (20) mittels eines nicht-terrestrischen Funkzugangsnetzes (130, 230) bereitgestellt werden kann, wobei das Nutzergerät (20) zwischen der Bereitstellung von Funkabdeckung entweder mittels des terrestrischen Funkzugangsnetzes (110) oder mittels des nicht-terrestrischen Funkzugangsnetzes (130, 230) wechseln kann, wobei zur Nutzung des Nutzergeräts (20) in einer Situation eines Verlusts der Funkabdeckung, die mittels des terrestrischen Funkzugangsnetzes (110) bereitgestellt wird, das Nutzergerät (20) so konfiguriert ist, dass:
-- das Nutzergerät (20), falls das Nutzergerät (20) -- während es vom terrestrischen Funkzugangsnetz (110) des mobilen Kommunikationsnetzes (100) versorgt wirdeinen Verlust der Funkabdeckung (302) erkennt, der vom terrestrischen Funkzugangsnetz (110) bereitgestellt wird,
anschließend ein Verzögerungszeitintervall (303) anwendet, bevor es ein Auswahlverfahren (304) zumindest bezüglich des nicht-terrestrischen Funkzugangsnetzes (130, 230) einleitet, wobei das Auswahlverfahren (304) einer Kategorie von Auswahlverfahren entspricht, wobei
-- falls Verlust der Funkabdeckung, die vom terrestrischen Funkzugangsnetz (110) bereitgestellt wird, nach Ablauf des Verzögerungszeitintervalls (303) noch immer erkannt wird, das Nutzergerät (20) ein Zellauswahlverfahren (304) bezüglich des nicht-terrestrischen Funkzugangsnetzes (130, 230) einleitet, und anderenfalls,
-- falls das Nutzergerät (20) die Funkabdeckung des terrestrischen Funkzugangsnetzes (110) wiedererlangt, das Nutzergerät (20) weiterhin vom terrestrischen Funkzugangsnetz (110) versorgt wird, wobei ein Zeit-zur-Satellitenauswahl-Parameter verwendet wird, um das Verzögerungszeitintervall (303) anzuzeigen oder zu definieren, das vor der Einleitung des Auswahlverfahrens (304) angewendet wird,
**dadurch gekennzeichnet, dass** das Verzögerungszeitintervall (303), das tatsächlich angewendet wird, -- zusätzlich zum Informationsgehalt des Zeit-zur-Satellitenauswahl-Parameters (220) -- auch von mindestens einem der folgenden Faktoren abhängt:
-- einem Mobilitätsmodus oder einem Mobilitätszustandskriterium des Nutzergeräts (20), wobei der Mobilitätsmodus oder das Mobilitätszustandskriterium des Nutzergeräts eines der folgenden ist:
-- stationär oder quasi-stationär oder sich nicht bewegend,
-- vergleichsweise langsam bewegend oder Normal-Mobilitätszustandskriterium,
-- vergleichsweise schneller bewegend oder Mittel-Mobilitätszustandskriterium,
-- sich mit hoher Geschwindigkeit bewegend oder Hoch-Mobilitätszustandskriterium, wobei das Verzögerungszeitintervall (303), das tatsächlich angewendet wird, basierend auf dem Informationsgehalt des Zeit-zur-Satellitenauswahl-Parameters (220) bestimmt wird, wobei dieser Wert abhängig vom Mobilitätsmodus oder dem Mobilitätszustandskriterium, das für das Nutzergerät (20) gilt, erhöht oder verringert wird.

10. Programm, umfassend einen computerlesbaren Programmcode, der, wenn er auf einem Nutzergerät (20) ausgeführt wird, das Nutzergerät (20) veranlasst, ein Verfahren nach einem der Ansprüche 1 bis 8 durchzuführen.

11. Computerlesbares Medium, umfassend Anweisungen, die, wenn sie auf einem Nutzergerät (20) ausgeführt werden, das Nutzergerät (20) veranlassen, ein Verfahren nach einem der Ansprüche 1 bis 8 durchzuführen.

## Revendications

1. Procédé pour un fonctionnement économe en énergie d'un équipement utilisateur (20) avec un réseau de communication mobile (100), dans lequel l'équipement utilisateur (20) se voit fournir des services de communication par le réseau de communication mobile (100) en utilisant un réseau d'accès radio qui fournit une couverture radio à l'équipement utilisateur (20), dans lequel au moins une partie du réseau d'accès radio correspond à un réseau d'accès radio terrestre (110) qui fournit une couverture radio à l'équipement utilisateur (20), dans lequel l'équipement utilisateur (20) peut se voir fournir une couverture radio supplémentaire au moyen d'un réseau d'accès radio non terrestre (130, 230), dans lequel l'équipement utilisateur (20) peut basculer entre la fourniture de couverture radio soit au moyen du réseau d'accès radio terrestre (110) soit au moyen du réseau d'accès radio non terrestre (130, 230), dans lequel afin d'utiliser ou de faire fonctionner l'équipement utilisateur (20) dans une situation de perte de couverture radio fournie au moyen du réseau d'accès radio terrestre (110), le procédé comprend les étapes suivantes :
-- dans une première étape, l'équipement utilisateur (20) est servi (301) par un réseau d'accès radio terrestre (110) d'un réseau de communication mobile (100) et détecte une perte de couverture radio (302) fournie par le réseau d'accès radio terrestre (110),
-- dans une deuxième étape, consécutivement à la détection d'une perte de couverture radio (302), l'équipement utilisateur (20) applique un intervalle de temps de retard (303) avant d'initier une procédure de sélection (304) au moins en ce qui concerne un réseau d'accès radio non terrestre (130, 230), la procédure de sélection (304) étant selon une catégorie de procédures de sélection,
-- dans une troisième étape,
-- dans le cas où une perte de couverture radio fournie par le réseau d'accès radio terrestre (110) est encore détectée à l'expiration de l'intervalle de temps de retard (303), l'équipement utilisateur (20) initie la procédure de sélection (304) en ce qui concerne le réseau d'accès radio non terrestre (130, 230), et sinon
-- dans le cas où l'équipement utilisateur (20) retrouve la couverture radio fournie par le réseau d'accès radio terrestre (110), l'équipement utilisateur (20) continue d'être servi par le réseau d'accès radio terrestre (110),
dans lequel un paramètre de temps de sélection satellite est utilisé afin d'indiquer ou de définir l'intervalle de temps de retard (303) appliqué avant d'initier la procédure de sélection (304),
**caractérisé en ce que** l'intervalle de temps de retard (303) qui est effectivement appliqué dépend -- en plus du contenu informationnel du paramètre de temps de sélection satellite (220) -- également d'au moins un des éléments suivants :
-- un mode de mobilité ou un critère d'état de mobilité de l'équipement utilisateur (20), dans lequel le mode de mobilité ou le critère d'état de mobilité de l'équipement utilisateur est l'un des suivants :
-- stationnaire ou quasi-stationnaire ou ne se déplaçant pas,
-- se déplaçant relativement lentement ou critère d'état de mobilité normale,
-- se déplaçant relativement plus rapidement ou critère d'état de mobilité moyenne,
-- se déplaçant à haute vitesse ou critère d'état de mobilité élevée, dans lequel l'intervalle de temps de retard (303) qui est effectivement appliqué est déterminé sur la base du contenu informationnel du paramètre de temps de sélection satellite (220), dans lequel cette valeur est augmentée ou diminuée en fonction du mode de mobilité ou du critère d'état de mobilité applicable à l'équipement utilisateur (20).

2. Procédé selon la revendication 1, dans lequel la procédure de sélection (304) dont l'initiation est retardée, dans la deuxième étape, par l'application de l'intervalle de temps de retard (303) correspond à au moins un des éléments suivants :
-- une procédure de sélection de réseau mobile public terrestre,
-- une procédure de sélection de cellule,
-- une procédure de re-sélection de cellule.

3. Procédé selon l'une des revendications précédentes, dans lequel le paramètre de temps de sélection satellite (220) est reçu, par l'équipement utilisateur (20), d'une entité de station de base (111) du réseau d'accès radio terrestre (110) et spécialement de l'entité de station de base (111) servant l'équipement utilisateur (20) au moment ou avant le moment où, pendant la première étape, l'équipement utilisateur (20) détecte la perte de couverture radio.

4. Procédé selon l'une des revendications précédentes, dans lequel l'intervalle de temps de retard (303) qui est effectivement appliqué dépend de
-- un paramètre défini par l'utilisateur et/ou défini par le réseau et/ou défini par le service individuel ou dédié uniquement, ou
-- le paramètre défini par l'utilisateur et/ou défini par le réseau et/ou défini par le service individuel ou dédié en plus du contenu informationnel du paramètre de temps de sélection satellite (220).

5. Procédé selon l'une des revendications précédentes, dans lequel le paramètre de temps de sélection satellite (220) est reçu par l'équipement utilisateur d'une diffusion de l'entité de station de base (111) servant actuellement ou ayant précédemment servi l'équipement utilisateur (20), dans lequel un canal de diffusion est utilisé pour transmettre le paramètre de temps de sélection satellite (220), dans lequel cette diffusion est effectuée en utilisant un bloc d'information système qui est pertinent pour tous les équipements utilisateur dans la cellule radio considérée.

6. Procédé selon l'une des revendications précédentes, dans lequel le paramètre de temps de sélection satellite (220) est reçu par l'équipement utilisateur (20) de l'entité de station de base (111) servant actuellement ou ayant précédemment servi l'équipement utilisateur (20) au moyen de l'utilisation d'un canal de signalisation dédié, dans lequel spécialement le paramètre de temps de sélection satellite (220) est reçu comme partie de l'un des éléments suivants :
-- le processus d'enregistrement de l'équipement utilisateur (20) avec le réseau de communication mobile (100) et/ou le réseau d'accès radio terrestre (110),
-- une procédure de couche non-accès régulière de l'équipement utilisateur (20) avec le réseau de communication mobile (100) et/ou le réseau d'accès radio terrestre (110), spécialement une procédure de mise à jour de zone de suivi, TAU,
-- une procédure de couche d'accès régulière de l'équipement utilisateur (20) avec le réseau de communication mobile (100) et/ou le réseau d'accès radio terrestre (110), spécialement une procédure de contrôle de mesure.

7. Procédé selon l'une des revendications précédentes, dans lequel le paramètre de temps de sélection satellite (220) est stocké dans un élément de mémoire ou module de l'équipement utilisateur (20) et dans lequel un contenu informationnel spécifique du paramètre de temps de sélection satellite (220) est tel que le paramètre de temps de sélection satellite (220) indique
-- dans le cas d'avoir ce contenu informationnel spécifique
-- que l'intervalle de temps de retard (303) appliqué dans la deuxième étape correspond à zéro seconde, résultant en ce que l'équipement utilisateur (20) initie immédiatement la procédure de sélection (304) en ce qui concerne le réseau d'accès radio non terrestre (130, 230) s'il détecte une perte de couverture radio fournie par le réseau d'accès radio terrestre (110).

8. Procédé selon l'une des revendications précédentes, dans lequel le contenu informationnel du paramètre de temps de sélection satellite (220) est tel que le paramètre de temps de sélection satellite (220) indique
-- dans le cas d'avoir ce contenu informationnel spécifique
-- que l'intervalle de temps de retard (303) correspond à 2 secondes ou à 3 secondes ou à 4 secondes ou à 5 secondes ou à 6 secondes ou à 8 secondes ou à 10 secondes, ou à 20 secondes, ou à 30 secondes, ou à d'autres multiples de 10 secondes, spécialement jusqu'à 360 secondes.

9. Équipement utilisateur (20) arrangé pour être exploité selon une configuration d'économie d'énergie de l'équipement utilisateur (20) avec le réseau de communication mobile (100), dans lequel l'équipement utilisateur (20) est configuré pour se voir fournir des services de communication par le réseau de communication mobile (100) en utilisant un réseau d'accès radio qui fournit une couverture radio à l'équipement utilisateur (20), au moins une partie du réseau d'accès radio correspondant à un réseau d'accès radio terrestre (110) qui fournit une couverture radio à l'équipement utilisateur (20), dans lequel l'équipement utilisateur (20) est en outre configuré de sorte qu'une couverture radio supplémentaire puisse être fournie, à l'équipement utilisateur (20), au moyen d'un réseau d'accès radio non terrestre (130, 230), dans lequel l'équipement utilisateur (20) peut basculer entre la fourniture de couverture radio soit au moyen du réseau d'accès radio terrestre (110) soit au moyen du réseau d'accès radio non terrestre (130, 230), dans lequel afin d'utiliser l'équipement utilisateur (20) dans une situation de perte de couverture radio fournie au moyen du réseau d'accès radio terrestre (110), l'équipement utilisateur (20) est configuré de sorte que :
-- l'équipement utilisateur (20), dans le cas où l'équipement utilisateur (20)
-- tout en étant servi par le réseau d'accès radio terrestre (110) du réseau de communication mobile (100)
-- détecte une perte de couverture radio (302) fournie par le réseau d'accès radio terrestre (110), applique ensuite un intervalle de temps de retard (303) avant d'initier une procédure de sélection (304) au moins en ce qui concerne le réseau d'accès radio non terrestre (130, 230), la procédure de sélection (304) étant selon une catégorie de procédures de sélection, dans lequel
-- dans le cas où une perte de couverture radio fournie par le réseau d'accès radio terrestre (110) est encore détectée à l'expiration de l'intervalle de temps de retard (303), l'équipement utilisateur (20) initie une procédure de sélection de cellule (304) en ce qui concerne le réseau d'accès radio non terrestre (130, 230), et sinon,
-- dans le cas où l'équipement utilisateur (20) retrouve la couverture radio fournie par le réseau d'accès radio terrestre (110), l'équipement utilisateur (20) continue d'être servi par le réseau d'accès radio terrestre (110), dans lequel un paramètre de temps de sélection satellite est utilisé afin d'indiquer ou de définir l'intervalle de temps de retard (303) appliqué avant d'initier la procédure de sélection (304), **caractérisé en ce que** l'intervalle de temps de retard (303) qui est effectivement appliqué dépend
-- en plus du contenu informationnel du paramètre de temps de sélection satellite (220)
-- également d'au moins un des éléments suivants :
-- un mode de mobilité ou un critère d'état de mobilité de l'équipement utilisateur (20), dans lequel le mode de mobilité ou le critère d'état de mobilité de l'équipement utilisateur est l'un des suivants :
-- stationnaire ou quasi-stationnaire ou ne se déplaçant pas,
-- se déplaçant relativement lentement ou critère d'état de mobilité normale,
-- se déplaçant relativement plus rapidement ou critère d'état de mobilité moyenne,
-- se déplaçant à haute vitesse ou critère d'état de mobilité élevée, dans lequel l'intervalle de temps de retard (303) qui est effectivement appliqué est déterminé sur la base du contenu informationnel du paramètre de temps de sélection satellite (220), dans lequel cette valeur est augmentée ou diminuée en fonction du mode de mobilité ou du critère d'état de mobilité applicable à l'équipement utilisateur (20).

10. Programme comprenant un code de programme lisible par ordinateur, qui, lorsqu'exécuté sur un équipement utilisateur (20), amène l'équipement utilisateur (20) à exécuter un procédé selon l'une des revendications 1 à 8.

11. Support lisible par ordinateur comprenant des instructions qui, lorsqu'exécutées sur un équipement utilisateur (20), amènent l'équipement utilisateur (20) à exécuter un procédé selon l'une des revendications 1 à 8.
